# EUROPÄISCHE PATENTSCHRIFT

(11) **EP 3 480 047 B1**
(45) Veröffentlichungstag und Bekanntmachung des Hinweises auf die Patenterteilung: **16.09.2026**
(21) Anmeldenummer: 18203203.7
(22) Anmeldetag: 29.10.2018
(51) Int. Cl.: B60K 7/00, B60K 1/00

(54) **ZENTRAL ANGETRIEBENE ANHÄNGERACHSE**
CENTRALLY DRIVEN TRAILER AXLE
ESSIEU DE REMORQUE ENTRAÎNÉ CENTRALEMENT

(30) Priorität: 03.11.2017 DE 102017125673
(43) Veröffentlichungstag der Anmeldung: 08.05.2019
(73) Patentinhaber: SAF-HOLLAND GmbH, 63856 Bessenbach (DE)
(72) Erfinder: Stegmann, Reiner, 63768 Hösbach (DE)
(74) Vertreter: Müller Schupfner & Partner Patent- und Rechtsanwaltspartnerschaft mbB (Muc)

(56) Entgegenhaltungen:
- WO-A1-2017/106620
- WO-A1-2017/144905
- WO-A1-2017/193130
- WO-A1-99/39426
- DE-A1- 102015 122 801
- SE-A1- 1 451 009
- US-A1- 2008 142 284
- US-A1- 2011 259 657

## Beschreibung

Die vorliegende Erfindung betrifft eine zentral angetriebene Achse, insbesondere zum Einsatz in einem Anhänger.

Aus dem Stand der Technik sind bereits Anhängerachsen bekannt, welche mittels Radnabenmotoren angetrieben werden. Hierbei wird jedes Rad durch einen unmittelbar am Rad festgelegten Radnabenmotor angetrieben. Problematisch ist dabei vor allem der hohe Bauraumbedarf der Radnabenmotoren. Dieser führt dazu, dass entweder die Spur des Anhängers vergrößert werden muss, wobei eine solche Vergrößerung aufgrund von gesetzlichen Regularien nur bedingt möglich ist, oder es muss der Abstand zwischen den achsabstützenden Elementen reduziert werden, wodurch die Federmitte reduziert wird, sodass die Fahrstabilität negativ beeinflusst wird. Darüber hinaus verursacht der Einsatz von Radnabenmotoren auch hohe Kosten, denn es werden meist zumindest zwei Radnabenmotoren an den Achsenden verbaut und mit einer Vielzahl von langen Hydraulikleitungen an eine zentrale Druckquelle angeschlossen. Diese langen Hydraulikleitungen sind nicht nur schwer, sondern beanspruchen auch Bauraum, der insbesondere im Bereich der Radaufhängungen knapp bemessen ist.

Die DE 10 2015 122 801 A1 betrifft eine antreibbare Achsanordnung umfassend zwei Halbachsen zum antreiben einer jeweiligen Radnabe sowie ein zwischen den Halbachsen vorgesehenes Differentialgetriebe zur Verteilung eines Antriebsmoments eines Motors auf die beiden Halbachsen.

Die WO 2017/106620 A1, die WO 2017/193130, die US 2011/0259657 A1 und die WO 2017/144905 A1 betreffen ebenfalls jeweils Achseinheiten mit Motoren, wobei diese Motoren jeweils zwei Antriebswellen antreiben können.

Es ist Aufgabe der vorliegenden Erfindung, eine angetriebene Achse, insbesondere für Anhänger, bereitzustellen, welche zum einen ein hohes Maß an Fahrstabilität sicherstellt und gleichzeitig nur einen geringen Bauraum beansprucht und geringe Kosten verursacht.

Diese Aufgabe wird mittels einer Achseinheit gemäß dem Anspruch 1 gelöst, wobei sich bevorzugte Ausführungsformen aus den abhängigen Ansprüchen ergeben.

Erfindungsgemäß umfasst eine Achseinheit, insbesondere für Anhängerachsen, wie Sattelaufliegerachsen, einen Motor und zwei Antriebswellen, wobei die Antriebswellen je einen Einleitungsabschnitt und je einen Ausleitungsabschnitt aufweisen, wobei der Motor dafür ausgelegt ist, ein Drehmoment über die Einleitungsabschnitte auf die zwei Antriebswellen auszuüben und der Ausleitungsabschnitt der jeweiligen Antriebswelle dazu ausgelegt ist, je ein Rad unmittelbar oder mittelbar anzutreiben. Bevorzugt findet eine erfindungsgemäße Achseinheit dabei Anwendung in Anhängern, wobei Anhänger sich insbesondere dadurch auszeichnen, dass diese im normalen Fahrbetrieb dazu ausgelegt sind, von einem Zugfahrzeug gezogen zu werden. Der alleinige Motor der Achseinheit ist dabei ein innerhalb eines Gehäuses angeordneter Energiewandler, welcher eine potentielle Energie, wie beispielsweise elektrische Energie bzw. Spannung, oder Fluiddruck, in kinetische Energie, insbesondere ein Drehmoment, wandelt. Der Motor im Sinne der vorliegenden Erfindung, unterscheidet sich von einem Getriebe dadurch, dass im normalen Betriebszustand, in welchem der Motor die Antriebswellen antreibt, die ankommende Energie nicht mittels eines Drehmomentes oder einer transversalen Bewegung in den Motor eingekoppelt wird. Die Antriebswellen der Achseinheit dienen dazu, ein Drehmoment zwischen dem Einleitungsabschnitt der jeweiligen Antriebswellen und dem Ausleitungsabschnitt zu übertragen. Der Einleitungsabschnitt ist dabei derjenige Abschnitt der Antriebswellen, welcher dazu dient ein Drehmoment vom Motor mittelbar oder unmittelbar zu empfangen bzw. aufzunehmen. Der Einleitungsabschnitt ist daher insbesondere der Abschnitt, welcher zum Motor hin orientiert ist und bevorzugt maximalen 20 cm vom Motor beabstandet ist, sodass aufgrund dessen, dass zwischen den Einleitungsabschnitten und dem Motor nur geringer Bauraum für weitere Elemente vorhanden ist, eine kompakte Achseinheit resultiert. Der Ausleitungsabschnitt der Antriebswelle hingegen dient dazu, mittelbar (über Zwischenelemente) oder unmittelbar ein Drehmoment auf ein Rad zu übertragen. Die Einleitungsabschnitte und/oder die Ausleitungsabschnitte sind bevorzugt derart gestaltet, dass die Drehmomentübertragung dabei formschlüssig erfolgt, sodass stark schwankende Drehmomente zuverlässig und ohne Schlupf übertragen werden können. Die Einleitungs- bzw. Ausleitungsabschnitte können daher vorzugsweise als ein Teil einer Längskeilverbindung, Passfederverbindung, Keilwellenverbindung, Zahnwellenverbindung, Polygonwellenverbindung, Kegelverbindung oder Stirnzahnverbindung ausgebildet sein. Besonders bevorzugt ist es, wenn die Einleitungsabschnitte und Ausleitungsabschnitte gleich ausgestaltet sind, sodass Kosten - aufgrund der einheitlichen Produktionsschritte - gespart werden können. Durch die erfindungsgemäße Ausgestaltung der Achseinheit wird erreicht, dass für den Antrieb von zwei Rädern nur ein Anschluss für die Energieversorgung verlegt werden muss und dass die Fahrstabilität dadurch gesteigert werden kann, dass die Auflage- bzw. Lagerpunkte der Achse weit voneinander separiert werden können, sodass insbesondere die Federmitte gesteigert werden kann. Die Federmitte ist dabei der Abstand der Auflage- bzw. Lagerpunkte der Achse, mittels welchen diese an einem Fahrzeugrahmen oder einer Karosserie abgestützt ist.

Erfindungsgemäß ist der Motor zwischen den beiden Einleitungsabschnitten der Antriebswellen angeordnet. Hierdurch wird erreicht, dass die Achseinheit nur einen geringen Bauraumbedarf aufweist. Als "zwischen" ist in diesem Zusammenhang zu verstehen, dass zumindest einige Bereiche des Motors geometrisch zwischen den beiden Einleitungsabschnitten der Antriebswellen angeordnet sind. Mit anderen Worten wird der Motor dabei durch die Längsachsen der Antriebswellen geschnitten.

In einer bevorzugten Ausführungsform ist der Motor ein Hydraulikmotor. Hierdurch wird eine hohe Leistungsdichte der Achseinheit erreicht, sodass Gewicht gespart werden kann. Zusätzlich weist der Einsatz eines Hydraulikmotors auch noch den Vorteil auf, dass vorhandene Sensoren nicht durch elektromagnetische Felder, welche durch den Einsatz eines Elektromotors verursacht sein könnten, gestört werden. Bevorzugt handelt es sich bei dem Hydraulikmotor um einen Axialkolbenmotor, sodass in kostengünstiger Weise eine stufenlose Einstellung der Drehzahl ermöglicht wird. Alternativ bevorzugt kann es sich bei dem Motor auch um eine Radialkolbenmaschine handeln, wodurch eine besonders hohe Lebensdauer erreicht wird, da bei dieser Art von Hydraulikmotoren besonders geringe Kolbenlasten auftreten.

Bevorzugt ist der Motor ein zweireihiger Hydraulikmotor, welcher zumindest zwei Ausgangswellen aufweist, die entkoppelbar voneinander sind. Ein zweireihiger Hydraulikmotor ist insbesondere dadurch gekennzeichnet, dass die beiden unabhängig voneinander gespeisten Energiewandlerreihen sich in einem Motor befinden. In anderen Worten bedeutet dies, dass die beiden Reihen des Motors sich in einem gemeinsamen Gehäuse befinden. Die beiden Reihen des zweireihigen Hydraulikmotors sind vorteilhafterweise in der Lage, unterschiedliche Drehzahlen bzw. Drehmomente auf die beiden Ausgangswellen auszuüben. Die Ausgangswellen sind die Wellen des Motors, welche dafür ausgelegt sind, die in dem Motor in kinetische Energie gewandelte Ursprungsenergie aus dem Motor zu leiten. Unter entkoppelbar ist dabei in diesem Zusammenhang zu verstehen, dass die beiden Ausgangswellen des Motors in der Lage sind, mit unterschiedlichen Drehzahlen zu laufen. Durch die beiden entkoppelten Ausgangswellen ist die Achseinheit in der Lage, auch bei Kurvenfahrten mit besonders kleinem Wendekreis nur einen geringen Verschleiß der Reifen sicherzustellen.

Vorteilhafterweise sind die Antriebswellen und/oder die Ausgangswellen des Motors parallel und/oder konzentrisch zu einander ausgerichtet. Hierdurch kann eine besonders bauraumsparende Achseinheit erreicht werden. Unter konzentrisch ist in diesem Zusammenhang unter anderem zu verstehen, dass die maßgeblichen Wellen um die gleiche Achse rotieren.

Alternativ bevorzugt ist zwischen der Ausgangswelle des Motors und den Einleitungsabschnitten der Antriebswellen ein Differenzial angeordnet. Hierdurch kann erreicht werden, dass auf kostengünstige Art und Weise der Reifenverschleiß bei Kurvenfahrten minimiert wird. Das Differenzial ist dabei insbesondere ein Planetengetriebe, welches vorteilhafterweise vier Kegelräder aufweist. Unter "zwischen" ist dabei in diesem Zusammenhang zu verstehen, dass der Motor nicht direkt ein Drehmoment auf die Einleitungsabschnitte überträgt, sondern dass ein Drehmoment vom Motor zuerst mittelbar oder unmittelbar auf ein Differenzial übertragen wird, welches mittel oder unmittelbar ein Drehmoment auf die Einleitungsabschnitte ausübt. Alternativ bevorzugt kann die Achseinheit auch differenzialfrei ausgestaltet sein. Hierdurch resultiert eine besonders kostengünstige Achseinheit.

Bevorzugt ist der Motor ein Elektromotor, insbesondere besitzt der Motor dabei zwei voneinander entkoppelbare Ausgangswellen. Der Einsatz eines Elektromotors hat dabei den Vorteil, dass besonders hohe Wirkungsgrade erreicht werden können und dass die Energieversorgung insbesondere nicht den Nachteil aufweist, dass Leckagen zu Umweltschäden führen können. Gegenüber einem Hydraulikmotor ist der Aufwand zur Energieversorgung wesentlich geringer, da im einfachsten Fall lediglich ein Kabel, anstelle von zumindest zwei Hydraulikleitungen, verlegt werden muss, da der Elektromotor unmittelbar mit der Fahrzeugmasse verbunden sein kann. Bevorzugt ist der Elektromotor dabei ein Gleichstrommotor, wie beispielsweise ein Servomotor. Hierdurch kann in besonders kostengünstiger Weise das Bordnetz des Fahrzeugs, insbesondere des Anhängers, in welchem die Achseinheit verbaut ist, genutzt werden. Alternativ bevorzugt kann es sich bei dem Elektromotor auch um einen Wechselstrommotor, insbesondere Asynchronmotor, handeln. Der Vorteil eines Wechselstrommotors liegt darin, dass dieser keinen Bürstenverschleiß aufweist und dass kurzzeitig eine starke Überlast des Motors möglich ist.

Vorteilhafterweise ist oder sind die Ausgangswelle/n des Motors innen hohl, wobei die Einleitungsabschnitte der Antriebswellen sich zumindest bereichsweise in die hohle/n Ausgangswelle/n des Motors erstrecken. Hierdurch wird erreicht, dass ein besonders geringer Bauraumbedarf der Achseinheit erreicht wird. Insbesondere erstrecken sich die Ausgangswellen dabei zu zumindest jeweils 2 cm in den inneren hohlen Bereich der Ausgangswelle bzw. der Ausgangswellen. Die Ausgangswellen können dabei komplett hohl sein oder nur bereichsweise. Bevorzugt wird das Drehmoment dabei direkt von der hohlen Ausgangswelle des Motors formschlüssig auf die Einleitungsabschnitte der Antriebswellen übertragen, sodass weniger Bauteile in der Achseinheit vorhanden sind und daher Kosten gespart werden können. In anderen Worten bedeutet dies, dass die Ausgangswelle wie eine Nabe für die Einleitungsabschnitte fungieren kann. Besonders bevorzugt ist es für eine schwankungsarme Drehmomentübertragung, wenn die Rotationsachse von zumindest einem Rad, welches mittels dem Motor angetrieben werden soll, die gleiche Rotationsachse aufweist wie die Ausgangswelle des Motors. Hierdurch können insbesondere Torsionsschwingungen in der Achseinheit vermieden bzw. verringert werden.

Zweckmäßigerweise sind die Antriebswellen rotationssymmetrisch ausgebildet. Hierdurch wird erreicht, dass Unwuchten vermieden werden. Unter rotationssymmetrisch ist dabei nicht zu verstehen, dass auch die Einleitungsabschnitte und die Ausleitungsabschnitte rotationssymmetrisch ausgebildet sein müssen, sondern dass Eingriffsgeometrien für eine formschlüssige Momentenübertragung vorhanden sind. Bevorzugt sind die Antriebswellen dabei zumindest bereichsweise bevorzugt vollständig innen hohl. Diese Ausgestaltung spart dabei nicht nur Gewicht, sondern erhöht auch das Ansprechverhalten der Achseinheit.

Vorteilhafterweise sind die Antriebswellen identisch ausgebildet. In anderen Worten bedeutet dies, dass die beiden Antriebswellen der Achseinheit austauschbar zueinander sind. Dadurch, dass die beiden Antriebswellen identisch ausgebildet sind, können Kosten, insbesondere bei der Fertigung und der Ersatzteilbereitstellung, gespart werden.

Bevorzugt sind die Antriebswellen spiegelsymmetrisch zu einer Ebene angeordnet, bevorzugt wird der Motor von der Symmetrieebene geschnitten oder ist maximal 20 cm beabstandet von der Symmetrieebene. Die Ebene bzw. Symmetrieebene kann insbesondere die Mittelebene des Fahrzeugs sein, in welchem die Achseinheit verbaut ist. Die Mittelebene ist dabei die Ebene mittig zwischen den distalen Außenbereichen des Fahrzeugs, wobei die Ebene bevorzugt eine Normale aufweist, welche parallel zu der Rotationsachse der Räder des Fahrzeugs orientiert ist. Mit anderen Worten ist die Mittelebene die Ebene des Fahrzeugs zwischen dem distalen rechten und dem distalen linken Rad einer Achse des Fahrzeugs. Durch die spiegelsymmetrische Anordnung der Antriebswellen und insbesondere des Motors, wird eine besonders vorteilhafte Gewichtsverteilung der Achseinheit erreicht. Unter der Begrifflichkeit, dass die Symmetrieebene den Motor schneidet ist dabei zu verstehen, dass die gedachte Symmetrieebene insbesondere das Gehäuse des Motors schneidet bzw. zumindest tangiert. Beabstandet bedeutet in diesem Zusammenhang, dass der der Symmetrieebene am nächstliegende Teil des Motors nicht weiter als 20cm entfernt von der Symmetrieebene ist.

Erfindungsgemäss sind die Antriebswellen jeweils einstückig. Hierdurch wird eine besonders kostengünstige und verschleißarme Konstruktion der Antriebswellen erreicht. Einstückig bedeutet dabei unter anderem, dass keine Gelenke oder andere verbindenden Elemente vorhanden sind, welche verschiedene Bestandteile der Antriebswelle miteinander verbinden. Hierdurch wird eine besonders sicher und schwankungsarme Drehbewegungsübertragung erreicht.

Bevorzugt ist zumindest eine der Antriebswellen in einem hohlen Achsrohr angeordnet. Bevorzugt sind jedoch beide Antriebswellen jeweils in einem hohlen Achsrohr angeordnet. Das hohle Achsrohr dient insbesondere dazu, die durch das Abstützen des Fahrzeugs auftretenden Biegemomente aufzunehmen. Hierdurch wird erreicht, dass die Antriebswellen der Achseinheit besonders dünn ausgestaltet werden können, da diese lediglich auf Torsion belastet werden. Bevorzugt steht das hohle Achsrohr dabei still, dreht sich also nicht. Zum Erreichen einer besonders geräuscharmen und geringen Bauraumbedarf aufweisenden Lagerung, sind die Antriebswellen bzw. die Antriebswelle mittels Gleitlagern in dem/den hohlen Achsrohren gelagert. Alternativ bevorzugt können die Antriebswellen bzw. die Antriebswelle im Achsrohr auch durch Wälzlager gelagert sein, wodurch eine besonders kostengünstige Achseinheit mit hohem Wirkungsgrad resultiert. Bevorzugt ist eine Radnabe, welche dazu dient das anzutreibende Rad zu lagern, an dem Achsrohr mittels Nabenlagern abgestützt bzw. gelagert. Vorteilhafterweise handelt es sich bei den Nabenlagern dabei um Wälzlager. Durch dieses Lagern der Radnabe auf dem Achsrohr ist es möglich, dass nur ein geringer Bauraumbedarf besteht. Besonders bevorzugt ist es, wenn zwei Achsrohre vorhanden sind, wenn der Motor der Achseinheit zwischen (geometrisch) den beiden Achsrohren angeordnet ist und mit diesen, insbesondere direkt, verbunden ist. Hierdurch wird erreicht, dass die Achseinheit eine eigenständige Antriebseinheit ausbildet, welche als eine komplette Einheit montiert werden kann, sodass Montagekosten gespart werden können. Mit Vorteil stützt sich jedes der hohlen Achsrohre über einen Längslenker und/oder ein Federelement gegenüber dem Rahmen des Fahrzeugs ab.

Zweckmäßigerweise ist zwischen dem Ausleitungsabschnitt und der Radnabe ein Freilauf angeordnet. Der Freilauf fungiert dabei insbesondere als eine Art Überholkupplung, sodass ein Drehmoment von der Antriebswelle an das Rad nur dann übertragen wird, wenn die Radnabe eine kleinere Drehzahl aufweist als die Antriebswelle und kein Drehmoment, wenn dies nicht der Fall ist. Durch den Einsatz eines Freilaufs ist es unter anderem in kostengünstiger Weise möglich, den Reifenverschleiß bei Kurvenfahrt zu reduzieren. Unter "zwischen" angeordnet ist dabei zu verstehen, dass der Ausleitungsabschnitt mittelbar oder unmittelbar ein Drehmoment auf den Freilauf übertragen kann, wobei der Freilauf dazu ausgelegt ist mittelbar oder unmittelbar ein Drehmoment auf das Rad bzw. die Radnabe zu übertragen. Alternativ kann der Freilauf auch ein Bestandteil der Radnabe sein. Entscheidend ist, dass der Freilauf zwischen den Ausleitungsabschnitten und dem anzutreibenden Rad angeordnet ist. Die Radnabe ist dabei insbesondere die Nabe, welche das anzutreibende Rad aufnimmt bzw. lagert.

Bevorzugt ist zwischen der Antriebswelle und der Radnabe eine schaltbare Kupplung angeordnet. Schaltbar bedeutet dabei, dass die Kupplung zumindest zwei Zustände einnehmen kann. Ein erster Zustand ist dadurch gekennzeichnet, dass die Drehmomentübertragung zwischen dem Motor und der Radnabe stattfinden kann. Im zweiten Zustand der Kupplung hingegen ist eine Drehmomentübertragung zwischen dem Motor und der Radnabe nicht möglich. Bevorzugt handelt es sich bei der Kupplung um eine kraftschlüssige Kupplung, wodurch erreicht wird, dass eine besonders kostengünstige Kupplung resultiert. Alternativ bevorzugt kann es sich auch um eine formschlüssige Kupplung, insbesondere eine Klauenkupplung, handeln. Der Vorteil einer formschlüssigen Kupplung liegt insbesondere darin, dass diese eine sichere Drehmomentübertragung auch bei dynamischen Schwankungen sicherstellt. Besonders bevorzugt bildet der Ausleitungsabschnitt der Antriebswelle einen Teil der Kupplung. Hierdurch kann ein besonders geringer Bauraumbedarf realisiert werden. In einer beispielhaften Ausführungsform kann dies dadurch erreicht werden, dass der Ausleitungsabschnitt der Antriebswelle eine Verzahnung in axialer Richtung ausbildet, welche in eine korrespondierende Axialverzahnung der Radnabe bzw. einer Übertragungsplatte eingreift, wobei die Antriebswelle dabei axial verschiebbar ist, sodass ein ein- bzw. auskuppeln erfolgen kann.

In einer bevorzugten Ausführungsform ist die Kupplung hydraulisch betätigbar. Durch die hydraulische Betätigung kann eine besonders platzsparende Betätigung der Kupplung erreicht werden. Bevorzugt sind die Zuleitungen, welche für die hydraulische Betätigung benötigt werden, dabei durch die hohle Antriebswelle geführt. Diese Art der hydraulischen Versorgung ist dabei besonders platz- und bauraumsparend. Um die Anzahl von Bauteilen zu reduzieren, ist es zweckmäßig, wenn die Kupplung über die gleiche Zuleitung mit Hydraulikflüssigkeit gespeist wird, wie der Hydraulikmotor der Achseinheit.

Bevorzugt ist die Kupplung derart ausgestaltet, dass die Kupplung bei einem Druckabfall in der Hydraulikversorgung kein Drehmoment überträgt. Durch diese Maßnahme wird die Ausfallsicherheit der Achseinheit erhöht, da ein Druckabfall in der Hydraulikversorgung ein Indiz für das Fehlen einer ausreichenden Energieversorgung des Motors ist. Das automatische Schalten in den Zustand der Kupplung, in welchem kein Drehmoment übertragen wird, kann unter anderem durch den Einsatz eines Energiespeichers - wie zum Beispiel einer Feder - erreicht werden.

Weitere Vorteile und Merkmale der Erfindung ergeben sich aus der nachfolgenden Beschreibung mit Bezug auf die beigefügten Figuren. Einzelne in den gezeigten Ausführungsformen offenbarte Merkmale können auch in anderen Ausführungsformen eingesetzt werden, sofern dies nicht ausdrücklich ausgeschlossen wurde. Es zeigen:
- Figur 1: eine Ausführungsform einer erfindungsgemäßen Achseinheit;
- Figur 2: einen Ausschnitt aus einer weiteren Ausführungsform einer erfindungsgemäßen Achseinheit.

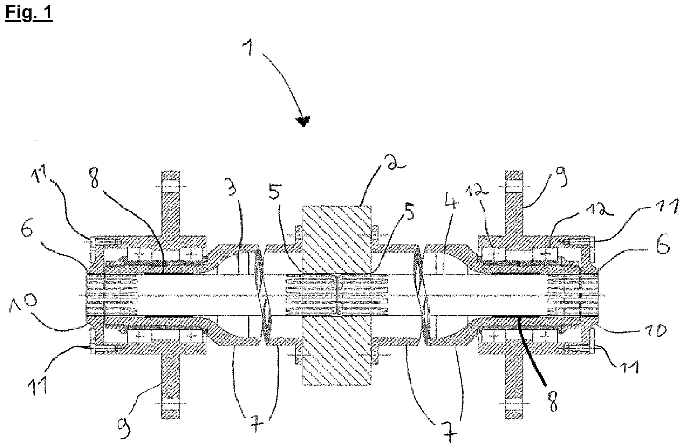

Die Figur 1 zeigt eine Achseinheit 1, welche einen Motor 2 aufweist, welcher die Antriebswellen 3 und 4 über die Einleitungsabschnitte 5 antreibt. Die Antriebswellen 3 und 4 treiben dabei über die Ausleitungsabschnitte 6 die Übertragungsplatten 10 an, welche über eine kraftschlüssige Verbindung durch die Befestigungsmittel 11 wiederum je eine Radnabe 9 antreiben. Die Radnaben 9 sind über die Nabenlager 12 auf den innen hohlen Achsrohren 7 gelagert. Die beiden koaxialen Antriebswellen 3 und 4 sind innerhalb der hohlen Achsrohre 7 über die Lager 8 gelagert. Der Motor 2 der Achseinheit 1 ist in der dargestellten Ausführungsform zwischen den beiden innen hohlen Achsrohren 7 angeordnet und an diese jeweils angeflanscht, sodass der Motor 2 keine Relativbewegung oder -verdrehung zu den Achsrohren 7 ausführen kann.

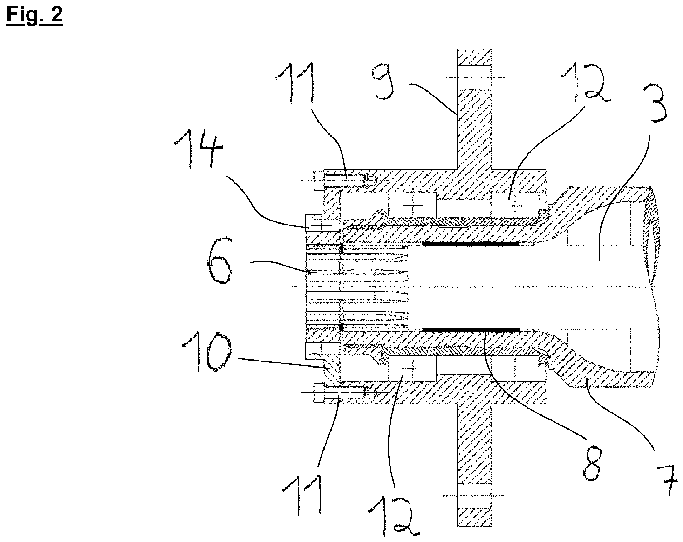

Die Figur 2 zeigt einen Ausschnitt einer Ausführungsform einer Achseinheit 1 im Bereich der Ausleitungsabschnitte 6 der Antriebswelle 3. Kennzeichnend für die dargestellte Ausführungsform ist, dass in der Übertragungsplatte 10 ein Freilauf 14 vorgesehen ist, welcher dazu ausgelegt ist, wie eine Überholkupplung zu wirken. Die Übertragungsplatte 10 ist dabei kraftschlüssig mittels Befestigungsmitteln 11 an der Radnabe 9 verbunden. Die Radnabe 9 hingegen ist am innen hohlen Achsrohr 7 über die Nabenlager 12 gelagert. Vorteilhafterweise handelt es sich bei den Nabenlagern 12 dabei um Wälzlager, welche eine O-Anordnung aufweisen. Die Antriebswelle 3 stützt sich über das Lager 8, welches als Gleitlager ausgestaltet ist, gegenüber dem Achsrohr 7 ab.

### Bezugszeichenliste:

- 1 -: Achseinheit
- 2 -: Motor
- 3 -: Antriebswelle (links)
- 4 -: Antriebswelle (rechts)
- 5 -: Einleitungsabschnitt
- 6 -: Ausleitungsabschnitt
- 7 -: Achsrohr
- 8 -: Lager
- 9 -: Radnabe
- 10 -: Übertragungsplatte
- 11 -: Befestigungsmittel
- 12 -: Nabenlager
- 14 -: Freilauf

## Patentansprüche

1. Achseinheit (1), insbesondere für Anhängerachsen,
umfassend einen Motor (2) und zwei Antriebswellen (3,4),
wobei die Antriebswellen (3,4) je einen Einleitungsabschnitt (5) und je einen Ausleitungsabschnitt (6) aufweisen,
wobei der Motor (2) dafür ausgelegt ist, ein Drehmoment über die Einleitungsabschnitte (5) auf die zwei Antriebswellen (3,4) auszuüben und wobei der Ausleitungsabschnitt (6) der jeweiligen Antriebswelle (3,4) dazu ausgelegt ist, je ein Rad unmittelbar/mittelbar anzutreiben,
**dadurch gekennzeichnet, dass**
der Motor (2) zwischen den beiden Einleitungsabschnitten (5) der Antriebswellen (3,4) angeordnet ist,
wobei zumindest einige Bereiche des Motors (2) geometrisch zwischen den bei- den Einleitungsabschnitten (5) der Antriebswellen (3,4) angeordnet sind, die Antriebswellen (3,4) jeweils einstückig sind und
zumindest eine der Antriebswellen (3,4) in einem hohlen Achsrohr (7) angeordnet ist.

2. Achseinheit (1) nach Anspruch 1,
wobei der Motor (2) ein Hydraulikmotor ist.

3. Achseinheit (1) nach Anspruch 2,
wobei der Motor(1) ein zwei-reihiger Hydraulikmotor Motor ist, welcher zumindest zwei Ausgangswellen aufweist, die entkoppelbar voneinander sind.

4. Achseinheit (1) gemäß einem der Ansprüche 1 bis 3,
wobei zwischen der Ausgangswelle des Motors (2) und den Einleitungsabschnitten (5) der Antriebswellen (3,4) ein Differenzial angeordnet ist.

5. Achseinheit (1) nach einem der Ansprüche 1 oder 4,
wobei der Motor (1) ein Elektromotor ist, und vorzugsweise zwei voneinander entkoppelbare Ausgangswellen besitzt.

6. Achseinheit (1) gemäß einem der vorhergehenden Ansprüche,
wobei die Ausgangswelle/n des Motors (2) innen hohl ist/sind, und wobei die Einleitungsabschnitte (5) der Antriebswellen (3,4) sich zumindest bereichsweise in die hohle/n Ausgangswelle/n des Motors (2) erstrecken.

7. Achseinheit (1) nach einem der vorhergehenden Ansprüche,
wobei die Antriebswellen (3,4) identisch ausgebildet sind.

8. Achseinheit (1) nach einem der vorhergehenden Ansprüche,
wobei die Antriebswellen (3,4) spiegelsymmetrisch zu einer Symmetrieebene angeordnet sind,
wobei der Motor (1) die Symmetrieebene schneidet, oder maximal 20 cm beabstandet von der Symmetrieebene ist.

9. Achseinheit (1) nach einem der vorhergehenden Ansprüche,
wobei zwischen dem Ausleitungsabschnitt (6) und der Radnabe (9) ein Freilauf (14) angeordnet ist.

10. Achseinheit (1) nach einem der vorhergehenden Ansprüche,
wobei zwischen der Antriebswelle (3,4) und der Radnabe (9) eine schaltbare Kupplung angeordnet ist.

11. Achseinheit (1) gemäß Anspruch 10,
wobei die Kupplung hydraulisch betätigbar ist.

12. Achseinheit (1) gemäß Anspruch 11,
wobei die Kupplung derart ausgestaltet ist, dass die Kupplung bei einem Druckabfall in der Hydraulikversorgung kein Drehmoment überträgt.

## Claims

1. Axle unit (1), in particular for trailer axles,
comprising a motor (2) and two drive shafts (3, 4),
wherein the drive shafts (3, 4) each have an input section (5) and an output section (6),
wherein the motor (2) is designed to apply torque to the two drive shafts (3, 4) via the input sections (5), and
wherein the output section (6) of each drive shaft (3, 4) is designed to drive a respective wheel directly or indirectly,
**characterized in that** the motor (2) is arranged between the two input sections (5) of the drive shafts (3, 4),
wherein at least some portions of the motor (2) are geometrically arranged between the two input sections (5) of the drive shafts (3, 4),
the drive shafts (3, 4) are each one-piece, and
at least one of the drive shafts (3, 4) is housed in a hollow axle tube (7).

2. Axle unit (1) according to claim 1,
wherein the motor (2) is a hydraulic motor.

3. Axle unit (1) according to claim 2,
wherein the motor (1) is a two-row hydraulic motor having at least two output shafts that can be decoupled from one another.

4. Axle unit (1) according to any one of claims 1 to 3,
wherein a differential is arranged between the output shaft of the motor (2) and the input sections (5) of the drive shafts (3, 4).

5. Axle unit (1) according to any one of claims 1 or 4,
wherein the motor (1) is an electric motor and preferably has two output shafts that can be decoupled from one another.

6. Axle unit (1) according to any one of the preceding claims,
wherein the output shaft(s) of the motor (2) is/are hollow, and wherein the input sections (5) of the drive shafts (3, 4) extend, at least in some areas, into the hollow output shaft(s) of the motor (2).

7. Axle unit (1) according to any one of the preceding claims,
wherein the drive shafts (3, 4) are identically constructed.

8. Axle unit (1) according to any one of the preceding claims,
wherein the drive shafts (3, 4) are arranged in mirror symmetry with respect to a plane of symmetry,
wherein the motor (1) intersects the plane of symmetry or is spaced a maximum of 20 cm from the plane of symmetry.

9. Axle unit (1) according to any one of the preceding claims,
wherein a freewheel (14) is arranged between the output section (6) and the wheel hub (9).

10. Axle unit (1) according to any one of the preceding claims,
wherein a shiftable coupling is arranged between the drive shaft (3, 4) and the wheel hub (9).

11. Axle unit (1) according to claim 10,
wherein the coupling is hydraulically actuated.

12. Axle unit (1) according to claim 11,
wherein the coupling is designed such that the coupling does not transmit torque in the event of a pressure drop in the hydraulic supply.

## Revendications

1. Ensemble d'essieu (1), notamment pour essieux de remorques, comprenant un moteur (2) et deux arbres d'entraînement (3, 4),
les arbres d'entraînement (3, 4) comportant chacun un tronçon d'entrée (5) et un tronçon de sortie (6),
le moteur (2) étant conçu pour exercer un couple de rotation sur les deux arbres d'entraînement (3, 4) par l'intermédiaire des tronçons d'entrée (5), et le tronçon de sortie (6) de chaque arbre d'entraînement (3, 4) étant conçu pour entraîner directement/indirectement une roue respective,
**caractérisé en ce que**
le moteur (2) est disposé entre les deux tronçons d'entrée (5) des arbres d'entraînement (3, 4),
au moins certaines zones du moteur (2) étant disposées géométriquement entre les deux tronçons d'entrée (5) des arbres d'entraînement (3, 4),
les arbres d'entraînement (3, 4) étant chacun monoblocs, et l'un au moins des arbres d'entraînement (3, 4) étant logé dans un tube d'essieu (7) creux.

2. Ensemble d'essieu (1) selon la revendication 1,
dans lequel le moteur (2) est un moteur hydraulique.

3. Ensemble d'essieu (1) selon la revendication 2,
dans lequel le moteur (2) est un moteur hydraulique à deux rangées de pistons qui comporte au moins deux arbres de sortie aptes à être désaccouplés l'un de l'autre.

4. Ensemble d'essieu (1) selon l'une des revendications 1 à 3,
dans lequel un différentiel est disposé entre l'arbre de sortie du moteur (2) et les tronçons d'entrée (5) des arbres d'entraînement (3, 4).

5. Ensemble d'essieu (1) selon l'une des revendications 1 ou 4,
dans lequel le moteur (1) est un moteur électrique et comporte de préférence deux arbres de sortie aptes à être désaccouplés l'un de l'autre.

6. Ensemble d'essieu (1) selon l'une des revendications précédentes,
dans lequel le ou les arbres de sortie du moteur (2) sont creux à l'intérieur, et les tronçons d'entrée (5) des arbres d'entraînement (3, 4) s'étendent au moins localement jusque dans le ou les arbres de sortie creux du moteur (2).

7. Ensemble d'essieu (1) selon l'une des revendications précédentes,
dans lequel les arbres d'entraînement (3, 4) sont de conception identique.

8. Ensemble d'essieu (1) selon l'une des revendications précédentes,
dans lequel les arbres d'entraînement (3, 4) sont disposés de manière axialement symétrique par rapport à un plan de symétrie,
le moteur (1) coupe ledit plan de symétrie ou est situé à une distance maximale de 20 cm dudit plan de symétrie.

9. Ensemble d'essieu (1) selon l'une des revendications précédentes,
dans lequel une roue libre (14) est disposée entre le tronçon de sortie (6) et le moyeu de roue (9).

10. Ensemble d'essieu (1) selon l'une des revendications précédentes,
dans lequel un embrayage commutable est disposé entre l'arbre d'entraînement (3, 4) et le moyeu de roue (9).

11. Ensemble d'essieu (1) selon la revendication 10,
dans lequel l'embrayage est à commande hydraulique.

12. Ensemble d'essieu (1) selon la revendication 11,
dans lequel l'embrayage est conçu de telle sorte que l'embrayage ne transmet aucun couple de rotation en cas de chute de pression dans le circuit hydraulique d'alimentation.
